(19) **Europäisches Patentamt / European Patent Office / Office européen des brevets**

(11) **EP 4 778 964 A1**

(12) **EUROPEAN PATENT APPLICATION**
published in accordance with Art. 153(4) EPC

(43) Date of publication:
**22.07.2026 Bulletin 2026/30**

(21) Application number: **24865625.8**

(22) Date of filing: **24.06.2024**

(51) International Patent Classification (IPC):
*C08J 7/04* (2020.01)   *C08J 7/044* (2020.01)
*H01M 4/134* (2010.01)   *H01M 4/66* (2006.01)
*H01M 4/1395* (2010.01)   *H01B 5/14* (2006.01)
*H01B 13/00* (2006.01)   *B32B 37/00* (2006.01)

(52) Cooperative Patent Classification (CPC):
**B32B 37/00; C08J 7/04; C08J 7/044; H01B 5/14; H01B 13/00; H01M 4/134; H01M 4/1395; H01M 4/66;** Y02E 60/10

(86) International application number:
**PCT/KR2024/008661**

(87) International publication number:
**WO 2025/058181 (20.03.2025 Gazette 2025/12)**

(84) Designated Contracting States:
**AL AT BE BG CH CY CZ DE DK EE ES FI FR GB GR HR HU IE IS IT LI LT LU MC ME MK MT NL NO PL PT RO RS SE SI SK SM TR**
Designated Extension States:
**BA**
Designated Validation States:
**GE KH MA MD TN**

(30) Priority: **15.09.2023 KR 20230123507**

(71) Applicants:
• **Toray Advanced Materials Korea Inc.**
**Gumi-si, Gyeongsangbuk-do 39389 (KR)**
• **LG Energy Solution, Ltd.**
**Seoul 07335 (KR)**

(72) Inventors:
• **LEE, Jung Hwan**
**Gumi-si Gyeongsangbuk-do 39389 (KR)**

• **PARK, Jong Yong**
**Gumi-si Gyeongsangbuk-do 39389 (KR)**
• **LEE, Seung Woo**
**Gumi-si Gyeongsangbuk-do 39389 (KR)**
• **CHAE, Jong Hyun**
**Daejeon 34122 (KR)**
• **JOO, Mun Kyu**
**Daejeon 34122 (KR)**
• **LEE, Il Ha**
**Daejeon 34122 (KR)**
• **KWON, Yo Han**
**Daejeon 34122 (KR)**

(74) Representative: **Groth & Co. KB**
**P.O. Box 6107**
**102 32 Stockholm (SE)**

(54) **TRANSFER RELEASE FILM AND LITHIUM ELECTRODES USING SAME AND MANUFACTURING METHOD THEREOF**

(57) A transfer release film according to the present invention comprises: a substrate; a release layer formed by applying a release composition including an ion conductive polymer resin and a solvent onto one surface of the substrate; and a lithium deposition layer formed by being deposited on the upper surface of the release layer. In the transfer release film according to the present invention having this configuration, the release layer is detached from the substrate and transferred to an electrode together with the lithium deposition layer, thereby serving as a protective layer of the lithium deposition layer.

FIG. 2

## Description

### Technical Field

The present invention relates to a transfer release film, and more particularly, to a transfer release film in which a lithium deposition layer is formed on a surface of a release layer such that the release layer and the lithium deposition layer are transferred together, a lithium electrode using the same, and a manufacturing method thereof.

### Background Art

Recently, with the gradual increase in the adoption of mobile phones, camcorders, laptops, personal computers (PCs), and even electric vehicles, interest in energy storage technology has been growing, and efforts toward the research and development of electrochemical devices have been becoming more specific in response to the expansion of such application fields. Electrochemical devices are the field that is receiving the most attention in this respect, with particular focus on the development of secondary batteries that are chargeable and dischargeable. In recent years, research and development have been actively conducted on the design of new electrodes and batteries to improve the capacity, density, and specific energy of such secondary batteries.

In connection with the research and development of electrodes and batteries for secondary batteries, studies have been conducted to use metalloid oxides such as silicon oxide ($SiO_x$) to improve cycle characteristics and alleviate volume expansion. Among these, silicon (Si)-based composites that simultaneously use silicon-based materials and carbon-based materials have been developed to minimize the volume expansion of silicon-based materials and thereby simultaneously increase high capacity and charge/discharge cycle life. This is achieved by covering the silicon-based material with carbon, which improves the electrical conductivity between active material particles and the electrochemical properties for the electrolyte, while reducing the volume expansion of silicon-based particles, thereby increasing the lifetime of the secondary battery. In addition, in this case, in order to address the problem of reduced initial charge/-discharge efficiency due to the formation of irreversible phases caused by silicon-based materials during initial charge/-discharge, the metalloid oxide is pre-combined with lithium to contain lithium, which reduces the formation of irreversible phases such as lithium oxide or lithium metal oxide during the initial charge/discharge of the battery, thereby increasing the initial efficiency of the negative active material.

However, as described above, secondary batteries using lithium have restrictions in manufacturing processes due to the reactivity of lithium metal, and contact with oxygen and moisture in the atmosphere during assembly of the secondary batteries is inevitable, resulting in reduced lifespan and performance of the battery. Moreover, the growth of lithium dendrites causes a reduction in the charge/discharge efficiency of the lithium electrode.

### Technical problem

The present invention has been devised to solve the above-described problems, and an object of the present invention is to provide a transfer release film for manufacturing a lithium electrode having a structure capable of preventing the growth of lithium dendrites by preventing contact with the atmosphere and lowering the diffusion barrier of lithium metal during the formation of the lithium electrode of a lithium secondary battery, as well as to provide a lithium electrode using the same, and a manufacturing method thereof.

In addition, another object of the present invention is to provide a transfer release film, a lithium electrode using the same, and a manufacturing method thereof, in which, instead of directly depositing a lithium deposition layer on a current collector, the lithium deposition layer is first deposited on a separate release layer and then transferred to the current collector together with the release layer, thereby controlling the transferability of the lithium deposition layer and controlling reactivity between the lithium and a substrate, as well as reactivity with heat and moisture during the formation of the lithium deposition layer.

In addition, yet another object of the present invention is to provide a transfer release film capable of minimizing exposure of lithium metal to the atmosphere during the manufacturing process of a lithium electrode, a lithium electrode using the same, and a manufacturing method thereof.

The above and other objectives and advantages of the present invention will become apparent from the following description of preferred embodiments.

### Technical Solution

The above objects are achieved by a transfer release film comprising a substrate, a release layer formed by applying a release composition including an ion conductive polymer resin and a solvent onto one surface of the substrate, and a lithium deposition layer formed by being deposited on an upper surface of the release layer.

Preferably, the release layer may be detached from the substrate and transferred together with the lithium deposition layer to an electrode.

Preferably, the transfer release film may further comprise a coating layer formed on the other surface of the substrate and including an ion conductive polymer resin.

Preferably, the ion conductive polymer resin may be dissolved by an electrolyte provided in an assembly of the electrode.

Preferably, the transfer release film may have a peeling force satisfying the following Equations 1 and 2:

$$(\text{Equation 1})$$

$$1 < TR < 100$$

$$(\text{Equation 2})$$

$$1 < FR < 20$$

where TR represents the peeling force measured, prior to forming the lithium deposition layer on the release layer, by adhering Nitto-31B tape on a surface of the release layer at room temperature (23 °C) and then peeling the release layer from the substrate at a speed of 0.3 mpm while holding the Nitto-31B tape in a state where the substrate is fixed, FR represents the peeling force measured, prior to forming the lithium deposition layer on the release layer, by adhering Nitto-31B tape on a surface of the release layer at room temperature (23 °C) and then peeling the substrate from the release layer while holding the substrate in a state where the Nitto-31B tape is fixed, and a unit of peeling force is gf/inch.

Preferably, the transfer release film may be such that when Nitto-31B tape is adhered to a surface of the release layer and then peeled at a speed of 0.3 mpm, a peeling force satisfies the following Equation 3:

$$(\text{Equation 3})$$

$$1 < TR1/TR0 < 5$$

where TR0 represents the peeling force of the release layer before heat treatment, TR1 represents the peeling force of the release layer after heat treatment at 80°C for 5 hours, and a unit of peeling force is gf/inch.

Preferably, the transfer release film may be such that when Nitto-31B tape is adhered to a surface of the lithium deposition layer and then peeled at a speed of 0.3 mpm, a peeling force of the release layer that is peeled together with the lithium deposition layer from an interface of the substrate satisfies the following Equation 4:

$$(\text{Equation 4})$$

$$1 \leq LR \leq 200$$

where LR represents the peeling force of the release layer that is peeled together with the lithium deposition layer, and a unit of peeling force is gf/inch.

Preferably, the ion conductive polymer resin may comprise at least one selected from among cyclic olefin copolymer, polymethylmethacrylate, polyacrylate, polycarbonate, polystyrene, polyurethane, polyimide, and polyethylene naphthalate.

Preferably, glass transition temperature (Tg) of the ion conductive polymer resin may be 80 °C to 150 °C.

Preferably, the release composition may comprise 3 to 50 parts by weight of the ion conductive polymer resin, based on total 100 parts by weight of the composition.

Preferably, the solvent may comprise at least one selected from among ethyl acetate (EA), methyl acetate (MA), methyl ethyl ketone (MEK), toluene, tetrahydrofolic acid (THFA), and cyclohexane.

Preferably, a water contact angle of a surface of the release layer may be 65° to 90°.

Preferably, a water vapor transmission rate of the release layer may be 200 g/m²·day or less.

Preferably, an ionic conductivity of the release layer may be $10^{-6}$ to $10^{-1}$ S/cm.

Preferably, a surface pencil hardness of the release layer may be 3H or greater.

Preferably, an arithmetic mean roughness (Ra) of the substrate may be 10 nm to 2,000 nm.

Preferably, a thickness of the release layer may be 0.2 $\mu$m to 2 $\mu$m.

Preferably, a thickness of the lithium deposition layer may be 1.5 $\mu$m to 10 $\mu$m.

Preferably, after the lithium deposition layer is cross-cut into 100 squares, Nitto-31B tape is attached to a surface thereof, and then the tape is removed, a residual rate of the lithium deposition layer, which indicates the number of squares remaining on the tape, may be 10 or less.

In addition, the above objects are achieved by a lithium electrode comprising a current collector, a lithium deposition layer formed on at least one surface of the current collector, and a protective layer formed on the lithium deposition layer, wherein the lithium deposition layer and the protective layer are formed of the lithium deposition layer and the release layer transferred from the above-described transfer release film.

Further, the above objects are achieved by a method of manufacturing a lithium electrode, which comprises forming a release layer by coating a release composition including an ion conductive polymer resin and a solvent on at least one surface of a substrate, forming a lithium deposition layer by depositing lithium metal on the release layer, and attaching a surface of the lithium deposition layer to a current collector and then transferring the release layer and the lithium deposition layer to the current collector.

## Advantageous Effects

According to one embodiment of the present invention, a transfer release film, a lithium electrode using the same, and a method of manufacturing the lithium electrode are provided, wherein the lithium electrode can be manufactured by first forming a release layer and a lithium deposition layer on a separate substrate, rather than directly forming the lithium deposition layer on a current collector, and then transferring the release layer and the lithium deposition layer together to the current collector, thereby minimizing exposure of lithium to the atmosphere during the electrode manufacturing process and preventing the growth of lithium dendrites.

In addition, according to the present invention, as the lithium deposition layer and the release layer are simultaneously transferred during transfer of the lithium deposition layer to the current collector, the release layer can serve as a protective layer for the lithium deposition layer and the surface of the current collector.

Furthermore, according to the present invention, by adjusting the thickness of the lithium deposition layer, the lifespan of the secondary battery can be improved.

However, the effects of the present invention are not limited to the effects mentioned above, and other effects not mentioned will be clearly understood by those skilled in the art from the description below.

## Brief Description of Drawings

FIG. 1 is a cross-sectional view of a transfer release film according to an embodiment of the present invention in which a lithium deposition layer is not formed.

FIG. 2 is a cross-sectional view of a transfer release film according to an embodiment of the present invention.

## Mode for Invention

Hereinafter, embodiments of the present invention will be described in detail with reference to the accompanying drawings so as to be easily practiced by a person of ordinary skill in the art. This invention may be embodied in many different forms and should not be construed as being limited to only the embodiments set forth herein.

Parts not relating to description are omitted in the drawings in order to clearly describe the present invention and like reference numerals refer to like elements throughout the specification. Also, in the drawings, the thickness of layers and regions are exaggerated for clarity. In the present specification, when one component is referred to as being "on" or "above" another component, it can be directly on the other component or intervening components may also be present. On the contrary, when one component is referred to as being "directly on" or "directly above" another component, there are no intervening components present.

Unless otherwise defined, all technical and scientific terms used herein have the same meaning as commonly understood by one of ordinary skill in the art to which this invention belongs. In case of conflict, the present specification, including definitions, will control. Although methods and materials similar or equivalent to those described herein can be used in the practice or testing of the invention, suitable methods and materials are described herein.

The terms "comprise(s)" and "include(s)" and/or "comprising" and "including" as used herein, unless otherwise specified, do not preclude the presence of other components but rather allow for the inclusion of additional components.

As used herein, the term "a combination thereof" refers to a mixture or combination of one or more of the components described.

As used herein, the term "and/or" includes any and all combinations of one or more of the associated listed items.

The term "or" as used herein is to be understood as meaning "and/or." The expressions "at least one" or "one or more," when preceding a list of components, modify the entire list of components and do not modify the individual components of the list.

Unless otherwise specified in the present specification, all percentages, ratios, and parts are by weight. Furthermore, when an amount, concentration, or other value or parameter is given as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed.

Where a range of numerical values is recited herein, unless otherwise stated, the range is intended to include the endpoints thereof, and all integers and fractions within the range. It is not intended that the scope of the invention be limited to the specific values recited when defining a range.

As used in the present specification, each element is intended to encompass both the singular and plural forms unless clearly indicated otherwise.

Hereinafter, the present invention will be described in detail with reference to the attached drawings.

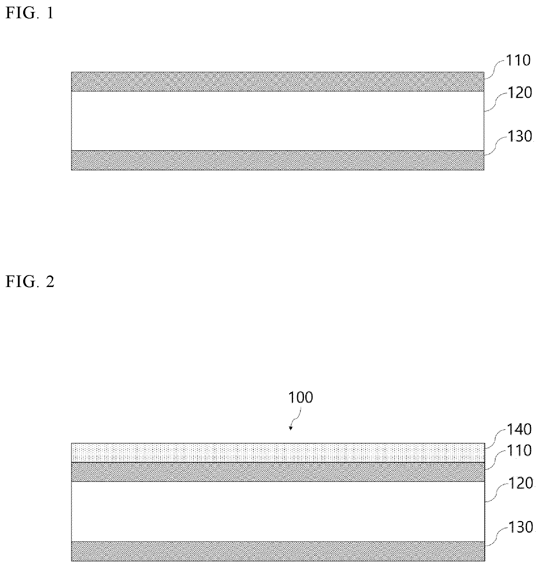

FIG. 1 is a cross-sectional view of a transfer release film according to an embodiment of the present invention in which a lithium deposition layer is not formed, and FIG. 2 is a cross-sectional view of a transfer release film according to an embodiment of the present invention.

Referring to FIG. 2, a transfer release film according to an embodiment of the present invention includes a substrate 120, a release layer 110 formed by being applied to one surface of the substrate 120, and a lithium deposition layer 140 formed by being deposited on an upper surface of the release layer 110, and may further include a coating layer 130 formed on the other surface of the substrate.

In general, lithium secondary batteries have various restrictions in manufacturing processes due to their high reactivity, and contact with oxygen and moisture in the atmosphere during battery assembly is inevitable, which results in reduced lifespan and performance of the battery. Moreover, the growth of lithium dendrites causes a reduction in the charge/discharge efficiency of the lithium electrode. In view of this, as a result of extensive research, the inventors have completed the present invention upon confirming that, by manufacturing a lithium electrode without directly forming a lithium deposition layer on a current collector but instead forming the lithium deposition layer on a separate substrate and then transferring it to the current collector, it is possible to minimize exposure of lithium to the atmosphere during the electrode manufacturing process and to prevent the growth of lithium dendrites. In this case, a general release film cannot be used to transfer the lithium deposition layer because it cannot control the reactivity with lithium metal and the reactivity with heat and moisture. Therefore, by providing a transfer release film having a release layer that exhibits non-reactivity with lithium, the processing processability of the lithium deposition layer may be secured, and transferability that enables easy transfer to a current collector may be ensured.

## 1. Substrate 120

According to an embodiment of the present invention, the substrate 120 of the transfer release film is preferably at least one selected from the group consisting of polyethylene terephthalate (PET), polyimide (PI), poly(methylmethacrylate) (PMMA), cellulose triacetate (TAC), polypropylene, polyethylene, and polycarbonate.

In an embodiment, the arithmetic mean roughness (Ra) of the substrate 120 is preferably 10 nm to 2,000 nm, and more preferably 10 nm to 100 nm. When the arithmetic mean roughness (Ra) of the substrate 120 is less than 10 nm, adhesion between the release layer 110 and the surface of the substrate 120 is increased, making it impossible to obtain transferability in which the release layer 110 and the lithium deposition layer 140 are transferred together. When the arithmetic mean roughness (Ra) exceeds 2,000 nm, adhesion between the substrate 120 and a deposition drum during the formation of the lithium deposition layer 140 is reduced, making it impossible to secure deposition processability.

## 2. Release Layer 110

The release layer 110 is formed by applying a release composition onto one surface of the substrate 120. Here, the release layer 110, after being formed by coating on one surface of the substrate 120, is characterized in that there are no changes in physical properties over time due to heat and moisture environments and the reaction with the lithium deposition layer 140 is controlled even when the lithium deposition layer 140 is formed on the release layer 110.

In an embodiment, the release composition for forming the release layer 110 includes an ion conductive polymer resin and a solvent.

In the present invention, the ion conductive polymer resin contained in the release composition for forming the release layer 110 exhibits hydrophobic properties with low affinity for water and has excellent moisture barrier properties with respect to the lithium deposition layer 140. Additionally, in the present invention, the ion conductive polymer resin may simultaneously serve as a release agent and a binder.

In an embodiment, the ion conductive polymer resin preferably includes at least one selected from among cyclic olefin copolymer (COC), polymethylmethacrylate (PMMA), polyacrylate, polycarbonate, polystyrene, polyurethane, polyimide, and polyethylene naphthalate.

In addition, the glass transition temperature (Tg) of the ion conductive polymer resin is preferably 80°C to 150°C, and more preferably 100°C to 130°C. When the glass transition temperature of the ion conductive polymer resin is less than 80°C, the hardness of the release layer 110 is reduced, so that the release layer 110 and the substrate 120 cannot be separated from each other when laminating to and peeling from a transfer target (current collector) together with the lithium deposition layer 140, and thus transferability cannot be achieved. When the glass transition temperature exceeds 150°C, the hardness of the release layer 110 becomes excessively high, so that the flexural modulus of the release layer 110 is reduced during winding into a roll, causing cracks to occur in the release layer 110 and separation from the substrate 120.

Additionally, the solvent contained in the release composition is a solvent capable of readily dissolving the ion conductive polymer resin, and preferably includes at least one solvent selected from among ethyl acetate (EA), methyl acetate (MA), methyl ethyl ketone (MEK), toluene, tetrahydrofolic acid (THFA), and cyclohexane. Moreover, the solvent preferably comprises a mixed solvent of one or more types so as to secure excellent appearance in the process of applying the release composition on the substrate 120.

In an embodiment, the release composition preferably comprises 3 to 50 parts by weight of the ion conductive polymer resin based on total 100 parts by weight of the composition, more preferably more than 10 parts by weight and less than 30 parts by weight. When the content of ion conductive polymer resin is less than 3 parts by weight, sufficient coating coverage cannot be secured, so the inherent physical properties of the release layer 110 cannot be exhibited and transfer characteristics cannot be achieved. When the content of ion conductive polymer resin exceeds 50 parts by weight, the viscosity of the release composition increases, so that coating defects such as ribbing, rainbow patterns, or cloudiness occur in large quantities, resulting in poor appearance.

In an embodiment, the water contact angle of the surface of the release layer 110 is preferably 65° to 90°. When the water contact angle of the surface of the release layer 110 is less than 65°, the surface may be readily contaminated by high surface energy, and susceptibility to blocking increases as the force of contact with the coating layer 130 on the other surface increases during winding. In contrast, when the water contact angle of the surface of the release layer 110 exceeds 90°, slipperiness increases when the film is wound into a roll or after depositing the lithium deposition layer 140, which may result in telescoping of a wound roll, scratches, and other appearance defects.

In an embodiment, the water vapor transmission rate of the release layer 110 is preferably 200 g/m$^2$·day or less, more preferably 180 g/m$^2$·day or less, and even more preferably 150 g/m$^2$·day or less. The release layer 110 may serve as a protective layer for the lithium deposition layer 140 by achieving the aforementioned water vapor transmission rate through the ion conductive polymer resin having low water vapor transmission rate. When the water vapor transmission rate of the release layer 110 exceeds 200 g/m$^2$·day, the amount of water vapor transmitted becomes excessive, resulting in the inability to protect the lithium deposition layer 140 from moisture.

In an embodiment, the ionic conductivity of the release layer 110 is preferably $10^{-6}$ to $10^{-1}$ S/cm, more preferably $10^{-5}$ to $10^{-2}$ S/cm, and even more preferably $10^{-4}$ to $10^{-3}$ S/cm. By satisfying the above range of ionic conductivity, the release layer 110 may meet the rate performance required for operation of the secondary battery. Conversely, when the ionic conductivity of the release layer 110 does not satisfy the above range, the rate performance cannot be met.

In addition, the release layer 110 is preferably formed by at least one coating method selected from among dip coating, spray coating, spin coating, die coating, roll coating, slot-die coating, bar coating, gravure coating, comma coating, curtain coating, and micro-gravure coating, but is not limited thereto, and various coating methods that may be used to form a coating layer in the art may be employed.

In an embodiment, the thickness of the release layer 110 is preferably 0.2 μm to 2 μm, and more preferably 0.3 μm to 1.5 μm. When the thickness of the release layer 110 is less than 0.2 μm, reverse peeling may occur during the transfer process, and when the thickness of the release layer 110 is more than 2 μm, peeling process of the film after the transfer process becomes difficult.

Additionally, the surface pencil hardness of the release layer 110 is preferably 3H or greater.

In addition, the ion conductive polymer resin included in the release composition is readily soluble in an electrolyte solution, and thus causes no side reactions during or after battery assembly. In particular, during transfer of the release layer 110 and the lithium deposition layer 140 together to an assembly of the electrode, the ion conductive polymer resin is dissolved by an electrolyte provided in the assembly of the electrode, without causing side reactions during or after battery assembly. The electrolyte solution for dissolving the ion conductive polymer resin may include at least one mixture selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halogenated products thereof, and examples of the halogenated products may include, but are not limited to, fluoroethylene carbonate (FEC).

As described above, the release layer 110 is peeled off from the substrate 120 together with the lithium deposition layer 140 and transferred to a transfer target (current collector, etc.), and in this process, the release layer 110 is dissolved and removed by the electrolyte provided in the electrode assembly. That is, the release layer 110 protects the lithium deposition layer 140 during the process of being transferred to the transfer target together with the lithium deposition layer 140, and during this process, the release layer 110 is dissolved by the electrolyte and removed without any additional process.

In addition, in FIGS. 1 and 2, the release layer 110 is formed only on one surface of the substrate 120, but the release layer 110 may be formed on both surfaces of the substrate 120. Due to such a release layer 110, a reverse peeling problem, in which the lithium deposition layer 140 is not transferred to the current collector but to an adjacent different substrate 120 during the winding process for transferring the lithium deposition layer 140 to the current collector, may be prevented, and the substrate may be easily separated after the lithium deposition layer 140 is transferred onto the current collector.

Moreover, since the release layer 110 is formed on both sides of the substrate 120, outgassing caused by a reaction between the substrate 120 and the lithium deposition layer due to heat and moisture that may be generated during the lithium deposition process for forming the lithium deposition layer 140 may be prevented.

Additionally, the release layer 110 may further include a protective layer between the release layer 110 and the lithium deposition layer 140. The protective layer between the release layer 110 and the lithium deposition layer 140 protects the lithium deposition layer 140 from heat and moisture in addition to the protection provided by the release layer 110.

### 3. Lithium Deposition Layer 140

The transfer release film according to an embodiment of the present invention includes the lithium deposition layer 140 formed by deposition on the upper surface of the release layer 110. More specifically, the lithium deposition layer 140 may be formed as a single layer of a lithium layer deposited (evaporated) on the release layer 110, and, if necessary, a lithium alloy layer may be formed on the surface of the deposited (evaporated) lithium metal layer through a gas treatment method. For example, a lithium metal layer may be formed on the release layer 110 by depositing gaseous lithium metal particles in a vacuum state, and a lithium alloy layer composed of $Li_2CO_3$ may be formed by introducing $CO_2$ gas onto the lithium metal layer, thereby forming the lithium deposition layer 140. By additionally forming a lithium alloy layer on the surface of the lithium metal layer deposited (evaporated) through such a gas treatment method, the effect of suppressing lithium dendrite growth may be enhanced.

Additionally, the thickness of the lithium deposition layer is preferably 1.5 $\mu$m to 10 $\mu$m. Such a lithium deposition layer 140 functions as a diffusion barrier for lithium ions to prevent the growth of lithium dendrites.

In addition, the lithium alloy layer is preferably formed by depositing at least one lithium alloy selected from among $Li_2CO_3$, $Li_2O_3$, $Li_3N$, LiOH, and LiH, and among these, lithium carbonate ($Li_2CO_3$) is more preferable in terms of stability. However, the lithium alloy is not limited to the above-described materials, and any lithium alloys generally used for current collectors in secondary batteries may be used without limitation.

Additionally, the thickness of the lithium alloy layer is preferably 1 nm to 1 $\mu$m. When the thickness of the lithium alloy layer is less than 1 nm, the effect of suppressing lithium dendrite growth is insignificant, and when the thickness exceeds 1 $\mu$m, a large density difference from lithium (Li) metal may cause peeling between the surface and the interface of the lithium metal.

The total thickness of the lithium deposition layer 140 including the lithium metal layer and the lithium alloy layer is preferably 1.5 $\mu$m to 10 $\mu$m, and more preferably 4 $\mu$m to 8 $\mu$m. When the total thickness is less than 1.5 $\mu$m, the charging and discharging performance of the secondary battery is reduced, and when the thickness exceeds 10 $\mu$m, the thickness of the electrode becomes excessively large.

### 4. Transfer Release Film 100

The transfer release film according to an embodiment of the present invention preferably has a peeling force that satisfies Equation 1.

$$(Equation\ 1)$$

$$1 < TR < 100$$

In Equation 1, TR represents the peeling force between the release layer 110 and the substrate 120 (the peeling force when peeling the release layer from the substrate) when Nitto-31B tape, an acrylic-based adhesive tape, is adhered to the surface of the release layer 110 at room temperature (23 °C), the substrate 120 is placed so that it touches the floor, and the acrylic-based adhesive tape is held and peeled at a speed of 0.3 mpm. The unit of peeling force is gf/inch.

When the value of Equation 1 is 1 or less, the release layer 110 is peeled off from the substrate 120 too easily, which causes premature peeling at the interface between the substrate 120 and the release layer 110 before the transfer process. When the value is 100 or greater, a large force is required for peeling, which may cause tearing of the film or failure to achieve transfer and peeling.

The transfer film according to an embodiment of the present invention preferably has a peeling force that satisfies Equation 2.

$$(\text{Equation 2})$$

$$1 < FR < 20$$

In Equation 2, FR represents the peeling force between the release layer 110 and the substrate 120 (the peeling force when peeling the substrate from the release layer) when Nitto-31B tape, an acrylic-based adhesive tape, is adhered to the surface of the release layer 110 at room temperature (23 °C), the acrylic-based adhesive tape is placed so that it touches the floor, and then the substrate, rather than the acrylic-based adhesive tape, is held and peeled at a speed of 0.3 mpm. The unit of peeling force is gf/inch.

When the value of Equation 2 is 1 or less, the substrate 120 is peeled off from the release layer 110, which causes premature peeling at the interface between the substrate 120 and the release layer 110 before the transfer process. When the value is 20 or greater, a large force is required for peeling, which may cause tearing of the film or failure to achieve transfer and peeling.

As described above, both Equations 1 and 2 represent the peeling force between the release layer 110 and the substrate 120, and exhibit different peeling force values as described above due to the differences in the peeling method. This is related to the mechanism by which the release layer 110 is peeled off from the substrate 120. When the release layer 110, which has relatively higher strength and lower elasticity than the substrate 120, is bent and peeled off while the substrate 120 and the adhesive tape are laminated together, cracks are generated in the release layer 110 due to the difference in the flexural stiffness between the PET forming the substrate 110 and the release layer 110, resulting in separation (transfer) of the release layer 110. In this process, when the release layer 110 is peeled off with the adhesive tape, the release layer 110 exhibits a strong tendency to remain adhered to the substrate 120. Conversely, when the structure is turned over and the substrate 120 is peeled off from the release layer 110 adhered to the adhesive tape, the release layer 110 exhibits a strong tendency to remain adhered to the adhesive tape, resulting in a difference between the peeling force values of Equations 1 and 2.

In the release transfer release film according to an embodiment of the present invention, when Nitto-31B tape is adhered to the surface of the release layer 110 and then peeled at a speed of 0.3 mpm, the peeling force between the release layer 110 and the substrate 120 preferably satisfies the following Equation 3.

$$(\text{Equation 3})$$

$$1 < TR1/TR0 < 5$$

In Equation 3, TR0 represents the peeling force of the release layer before heat treatment, TR1 represents the peeling force of the release layer after heat treatment at 80°C for 5 hours, and the unit of peeling force is gf/inch.

By satisfying the value of Equation 3, changes in peeling force under high-temperature conditions may be suppressed, thereby solving peeling-related problems at high temperatures.

In the transfer release film according to an embodiment of the present invention, when Nitto-31B tape is adhered to the surface of the lithium deposition layer 140 and then peeled at a speed of 0.3 mpm, the peeling force at the interface between the release layer 110 and the substrate 120, that is, the peeling force of the release layer that is peeled together with the lithium deposition layer from the interface between the release layer 10 and the substrate 120 after forming the lithium deposition layer 140 on the release layer 110, preferably satisfies the following Equation 4.

$$(\text{Equation 4})$$

$$1 \leq LR \leq 200$$

In Equation 4, LR represents the peeling force of the release layer that is peeled together with the lithium deposition layer, and the unit of peeling force is gf/inch.

When the value of Equation 4 is less than 1, peeling occurs too easily, resulting in premature peeling at the interface between the release layer 110 and the substrate 120 before the transfer process, and when the value exceeds 200, the lithium deposition layer 140 cannot be transferred.

In the transfer release film according to an embodiment of the present invention, the peeling force between the release layer 110 and the substrate 120 during transfer of the lithium deposition layer 140 to the current collector is preferably 1 to 100 gf/inch. When the above-described peeling force is less than 1 gf/inch, premature peeling occurs in which the lithium deposition layer 140 is first separated from the substrate 120 together with the release layer 110 in the state of the transfer release film, and when the value exceeds 100 gf/inch, a peeling defect occurs in which the substrate 120 is not peeled after the lithium deposition layer 140 is transferred to the current collector.

In addition, in the transfer release film according to an embodiment of the present invention, after cross-cutting the lithium deposition layer 140 into 100 squares, attaching Nitto-31B tape to the surface, and then removing the tape, a residual rate of the lithium deposition layer 140, which indicates the number of squares remaining on the tape, is preferably 10 or less. When the residual rate of the release layer exceeds 10, the release layer 110 does not separate from the substrate 120 together with the lithium deposition layer 140 and remains on the substrate 120, thereby reducing the transferability of the lithium layer.

### 5. Coating Layer 130

In the transfer release film according to an embodiment of the present invention, the substrate 120 may further include a coating layer 130 formed on the other surface (the surface opposite to the release layer). The coating layer 130 may have the same configuration as the release layer 110. The coating layer 130 may prevent a blocking phenomenon during winding of the transfer release film and may prevent outgassing caused by a reaction between the substrate 120 and the lithium deposition layer due to heat and moisture that may be generated during the lithium deposition process.

### 6. Lithium Electrode and Method of Manufacturing the Same

The transfer release film according to an embodiment of the present invention is used in transfer process in which the release layer 110 and the lithium deposition layer 140 are peeled off together from the substrate 120 and transferred and the release layer 110 serves as a protective layer (barrier) for the lithium deposition layer 140 during the manufacturing process of a lithium electrode, thereby preventing the formation of a native oxide layer on the lithium metal.

Accordingly, the lithium electrode according to an embodiment of the present invention may include a current collector, a lithium deposition layer formed on at least one surface of the current collector, and a protective layer formed on the lithium deposition layer, wherein the lithium deposition layer and the protective layer may be formed of the lithium deposition layer and the release layer transferred from the above-described transfer release film.

In addition, a method of manufacturing a lithium electrode according to an embodiment of the present invention includes step S101 of forming a release layer by coating a release composition on at least one surface of a substrate, step S102 of forming a lithium deposition layer by depositing lithium metal on the release layer, and step S103 of attaching the surface of the lithium deposition layer onto a current collector and then transferring the release layer and the lithium deposition layer to the current collector.

In step S101 of forming a release layer by coating a release composition on at least one surface of the substrate, the release composition has the same composition as the release composition of the transfer release film described above, and a redundant description thereof will be omitted.

After step S101 of forming a release layer by coating a release composition on at least one surface of the substrate and before performing step S102 of forming a lithium deposition layer on the release layer, a step of forming a protective layer on the release layer may be further included. In one example, the protective layer may include poly(vinylidene fluoride-co-hexafluoropropylene)(PVDF-HFP), and in addition, any general protective material capable of protecting lithium metal in a lithium battery or secondary battery may be used.

Next, step S102 of forming a lithium deposition layer on the release layer is a step of forming the lithium deposition layer as a single layer of lithium metal by depositing lithium metal on the release layer. In addition, if necessary, after step S102 of forming the lithium deposition layer, a step of forming a lithium alloy layer on the lithium deposition layer may be further included. In this case, the lithium deposition layer may be formed through a deposition process, and the lithium alloy layer may be formed through a gas treatment method. For example, a lithium metal layer may be formed on the release layer 140 by depositing gaseous lithium metal particles in a vacuum state, and a lithium alloy layer composed of $Li_2CO_3$ may be formed by introducing $CO_2$ gas onto the lithium metal layer, thereby forming the lithium deposition layer 140.

If the protective layer is formed after step S101, the lithium deposition layer 140 may be formed on the protective layer in step S102 of forming a lithium deposition layer on the release layer.

Next, in step S103 of transferring the release layer and the lithium deposition layer to the current collector, the release layer 110 and the lithium deposition layer 140 are transferred not only to one surface of the current collector, but also to both surfaces of the current collector, thereby forming the lithium deposition layer 140 on both surfaces of the current collector, thereby enabling the formation of a thin and uniform lithium deposition layer 140.

**[Examples]**

## 1. Verification of Transferability by Type of Release Layer Resin

To evaluate suitability for lithium deposition and transfer to a current collector, the transferability was first examined according to the type of resin used for the release layer.

Silicone-based, fluorine-based, melamine-based, urethane-based, acrylic-based, and olefin-based resins were each applied onto a polyester substrate film (by Toray Advanced Materials Korea Inc.), Excell-25 $\mu$m, arithmetic mean roughness Ra: 20 nm) to form a release layer having a thickness of 0.5 $\mu$m, thereby preparing release films. Each of the prepared films was left at room temperature (23 °C) for one day, after which 100 cross-cuts of 10 mm $\times$ 10 mm were made by crossing lines on the surface of the release layer using a cross hatch cutter, Nitto-31B tape was attached to the surface, rubbed with uniform force, and then removed, and the number of film pieces separated from the release layer and remaining on the tape was counted to determine the residual rate.

As a result, it was confirmed that there was no transferability in the case of silicone-based, fluorine-based, melamine-based, and urethane-based resins, with a residual rate of 100 (all of the release layers remaining on the tape), and that acrylic-based and olefin-based resins showed a residual rate of 0, indicating transferability.

In addition, when the same procedure was conducted except that the release layer was formed to a thickness of 1 $\mu$m, it was confirmed that silicone-based, fluorine-based, melamine-based, and urethane-based resins showed a residual rate of 100, indicating no transferability, whereas the acrylic-based and olefin-based resins showed a residual rate of 0, indicating transferability.

## 2. Verification of Moisture Barrier Properties of Coating Resin for Release Layer

To evaluate suitability as a material for a protective layer for a lithium electrode, the water vapor transmission rate (WVTR) of the release layer was measured to access its moisture barrier property. Here, the water vapor transmission rate (g/m$^2$ · day) refers to the amount [g] of water vapor that passes through a film with an area of 1m$^2$ in one day, and the lower the WVTR, the better the moisture barrier property.

First, three cups were each filled with water, and the top of each cup was covered with one of the following films: a film (TAC/PVdF-HFP) obtained by coating PVdF-HFP on a triacetyl cellulose film (TAC), a film (TAC/PMMA) obtained by coating PMMA resin on TAC, and a film (TAC/COC) obtained by coating COC resin on TAC. After one day had elapsed, the WVTR value of each film was measured using a water vapor transmission rate measuring device (TSY-T3 by Labthink Instruments Co., Ltd.).

As a result of the measurement, the WVTR values of TAC, TAC/PVdF-HFP, TAC/PMMA, and TAC/COC were measured to be 327 g, 319 g, 157 g, and 146 g, respectively, indicating that TAC/PMMA and TAC/COC exhibited excellent moisture barrier properties, and thus it was confirmed that they are suitable coating resins for transferring a protective layer for a lithium electrode.

**[Example 1]**

## (1) Preparation of Release Composition and Coating Layer Composition

A release composition was prepared by mixing 20 parts by weight of polymethyl methacrylate (PMMA) (IH830HT by LX MMA Co., Ltd.) as an ion conductive polymer resin, 40 parts by weight of ethyl acetate (EA), and 40 parts by weight of toluene, such that the solid content was 20 wt%.

Additionally, a coating layer composition was prepared by mixing 5 parts by weight of the ion conductive polymer resin ion conductive polymer resin (IH830HT by LX MMA Co., Ltd.), 47.5 parts by weight of ethyl acetate (EA), and 47.5 parts by weight of toluene, such that the solid content was 20 wt%.

## (2) Preparation of Film Having Release Layer and Coating Layer

A release composition was applied to one surface of a polyester substrate film (by Toray Advanced Materials Korea Inc.), Excell-25 $\mu$m, arithmetic mean roughness Ra: 20 nm) and a coating layer composition was applied to the other surface using a micro-gravure coater, and then dried at 140°C for 30 seconds to produce a film having a release layer coating thickness of 800 nm and a coating layer thickness of 200 nm on the other surface.

### (3) Preparation of Release Film Having Lithium Deposition Layer

A transfer release film having a lithium deposition layer with a thickness of 6 μm was produced by depositing lithium metal onto the release layer at 600 °C using an evaporation deposition method.

**[Example 2]**

A transfer release film was prepared in the same manner as in Example 1, except that polymethyl methacrylate (PMMA) (HP101 by LX MMA Co., Ltd.) was used as the ion conductive polymer resin in the release composition.

**[Example 3]**

A transfer release film was prepared in the same manner as in Example 1, except that a cyclic olefin copolymer (COC) (6013 Grade by Topas Advanced Polymers GmbH) was used as the ion conductive polymer resin in the release composition.

**[Example 4]**

A transfer release film was prepared in the same manner as in Example 1, except that the arithmetic mean roughness Ra of the substrate film was 10 nm.

**[Example 5]**

A transfer release film was prepared in the same manner as in Example 1, except that the arithmetic mean roughness Ra of the substrate film was 50 nm.

**[Example 6]**

A transfer release film was prepared in the same manner as in Example 1, except that the arithmetic mean roughness Ra of the substrate film was 2,000 nm.

**[Example 7]**

A transfer release film was prepared in the same manner as in Example 1, except that the coating thickness of the release layer was set to 200 nm.

**[Example 8]**

A transfer release film was prepared in the same manner as in Example 1, except that the coating thickness of the release layer was set to 400 nm.

**[Example 9]**

A transfer release film was prepared in the same manner as in Example 1, except that the coating thickness of the release layer was set to 1,000 nm.

**[Example 10]**

A transfer release film was prepared in the same manner as in Example 1, except that the coating thickness of the release layer was set to 2,000 nm.

**[Comparative Examples]**

**[Comparative Example 1]**

A transfer release film was prepared in the same manner as in Example 1, except that a water-based acrylic resin (GS0131 by Nippon Carbide Industries) was used as the ion conductive polymer resin in the release composition.

**[Comparative Example 2]**

A transfer release film was prepared in the same manner as in Example 1, except that a water-based acrylic resin (FT9542 by Nippon Carbide Industries) was used as the ion conductive polymer resin in the release composition.

**[Comparative Example 3]**

A transfer release film was prepared in the same manner as in Example 1, except that polymethyl methacrylate (PMMA) (HP05B by LX MMA Co., Ltd.) was used as the ion conductive polymer resin in the release composition.

**[Comparative Example 4]**

A transfer release film was prepared in the same manner as in Example 1, except that the arithmetic mean roughness Ra of the substrate film was 2 nm.

**[Comparative Example 5]**

A transfer release film was prepared in the same manner as in Example 1, except that the arithmetic mean roughness Ra of the substrate film was 8 nm.

**[Comparative Example 6]**

A transfer release film was prepared in the same manner as in Example 1, except that the coating thickness of the release layer was set to 50 nm.

**[Comparative Example 7]**

A transfer release film was prepared in the same manner as in Example 1, except that the coating thickness of the release layer was set to 100 nm.

**[Comparative Example 8]**

A transfer release film was prepared in the same manner as in Example 1, except that the coating thickness of the release layer was set to 190 nm.

The physical properties of the transfer release films prepared in Examples 1 to 10 and Comparative Examples 1 to 8 were measured through the following experimental examples, and the results are shown in Table 1. Meanwhile, the glass transition temperatures (Tg) of the ion conductive polymer resin used in each of the Examples and Comparative Examples are separately indicated in Table 1 below.

**[Experimental Examples]**

**(1) Measurement of Transferability**

For the prepared Examples and Comparative Examples, an acrylic-based adhesive tape (Nitto-31B) was attached to the surface of the lithium deposition layer, rubbed with a force of 2 kg, and then peeled off. Whether the release layer and the lithium deposition layer were transferred onto the tape and peeled off was checked.

∘: Transferred
X: Not transferred

**(2) Measurement of Peeling Force (TR, TR1) of Release Layer**

For the Examples and Comparative Examples, before forming the lithium deposition layer, the substrate was attached to a cold-rolled stainless steel plate using a double-sided adhesive tape. Then, an acrylic-based adhesive tape (Nitto-31B) was placed on the release layer, pressed with a 2 kg pressure roller, and allowed to stand at room temperature (23 °C) for 5 hours. The release layer was then peeled off from the substrate by pulling the Nitto-31B tape, and the peeling force TR and TR0 between the release layer and the substrate was measured. Subsequently, after allowing the sample to stand at 80 °C for 5 hours, the same method was used to peel the release layer from the substrate and measure the peeling force TR1.

The peeling force was measured using an AR-1000 tester (by ChemInstruments) at a peeling angle of 180° and a peeling speed of 0.3 mpm. The measurement was conducted five times and the average value (g/inch) was calculated, rounded to the first decimal place. In addition, the value of Equation 3 was calculated based on the measured values and rounded to the second decimal place.

### (3) Measurement of Peeling Force (FR) of Release Layer

For the examples and comparative examples, before forming the lithium deposition layer, a double-sided adhesive tape was attached to a cold-rolled stainless steel plate such that the adhesive surface of an acrylic-based adhesive tape (Nitto-31B), faced upward. A film was then placed so that the release layer was in contact with the adhesive surface of the Nitto-31B tape, pressed with a 2 kg pressure roller, and then allowed to stand at room temperature (23 °C) for 5 hours. The substrate was peeled off from the release layer, and the peeling force FR when the substrate was peeled off from the release layer was measured.

The peeling force was measured using an AR-1000 tester (by ChemInstruments) at a peeling angle of 180° and a peeling speed of 0.3 mpm. The measurement was conducted five times and the average value (g/inch) was calculated, rounded to the first decimal place.

### (4) Measurement of Peeling Force (LR) of Lithium Deposition Layer

For the transfer release films of the Examples and Comparative Examples, the substrate was attached to a cold-rolled stainless steel plate using a double-sided adhesive tape. An acrylic-based adhesive tape (Nitto-31B) was then placed on the lithium deposition layer, pressed with a 2 kg pressure roller, and allowed to stand at room temperature (23 °C) for 5 hours. Subsequently, the lithium deposition layer (lithium layer) and the release layer were peeled together from the substrate in the same manner as in Experimental Example 2, and the peeling force LR was measured.

### (5) Measurement of Crosscut Residual Rate

For the transfer release films of the Examples and Comparative Examples, the surface of the lithium deposition layer (lithium layer) was cross-cut into 100 squares of 10 mm × 10 mm using a cross-hatch cutter, and Nitto-31B tape was then attached thereto, rubbed with uniform force, and peeled off. The number of film pieces separated from the coating surface and remaining on the tape was counted, and the residual rate was expressed numerically (ASTM D3359, KS M ISO 2409).

### (6) Measurement of Coating Thickness (Dry Thickness)

The transfer release films of the Examples and Comparative Examples were cut into samples measuring 5 cm × 5 cm, and the dry thickness of the release layer was measured. The thickness was measured using an ellipsometer (Elli-SE, by Ellipso Technology Co., Ltd.), and was measured three times to obtain the average value.

### (7) Measurement of Arithmetic Mean Roughness (Ra)

The Ra of the substrate film surface was measured using a contact-type three-dimensional (3D) roughness tester (SE3300 by Kosaka Laboratory Ltd.). The average value was obtained by performing five repeated measurements at a standard measurement length of 0.08 cm.

[Table 1]

| Classification | Release layer resin | | Roughness | Thickness | Peeling force (gf/inch) | | | | | Transferability | Residual rate |
|---|---|---|---|---|---|---|---|---|---|---|---|
| | | | Substrate | Release layer | TR1 | TR (TR0) | LR | FR | TR1/TR0 | Release layer and lithium layer | Lithium layer |
| | Type | Tg (°C) | Ra(nm) | (nm) | 80 °C | 23 °C | 23 °C | 23 C | - | - | (%) |
| Example 1 | PMMA | 120 | 20 | 800 | 100 | 30 | 55 | 4.3 | 3.3 | ○ | 0 |
| Example 2 | PMMA | 80 | 20 | 800 | 132 | 88 | 142 | 12.1 | 1.5 | ○ | 0 |
| Example 3 | COC | 138 | 20 | 800 | 38 | 18 | 38 | 2.0 | 2.1 | ○ | 0 |
| Example 4 | PMMA | 120 | 10 | 800 | 182 | 88 | 158 | 5.1 | 2.1 | ○ | 0 |
| Example 5 | PMMA | 120 | 50 | 800 | 55 | 26 | 41 | 2.8 | 2.1 | ○ | 0 |
| Example 6 | PMMA | 120 | 2,000 | 800 | 105 | 32 | 65 | 3.1 | 3.3 | ○ | 0 |
| Example 7 | PMMA | 120 | 20 | 200 | 210 | 98 | 182 | 7.6 | 2.1 | ○ | 8 |
| Example 8 | PMMA | 120 | 20 | 400 | 162 | 78 | 168 | 5.7 | 2.1 | ○ | 1 |
| Example 9 | PMMA | 120 | 20 | 1,000 | 39 | 21 | 32 | 2.2 | 1.9 | ○ | 0 |
| Example 10 | PMMA | 120 | 20 | 2,000 | 25 | 15 | 28 | 2.1 | 1.7 | ○ | 0 |
| Comparative Example 1 | Water-based acryl | 70 | 20 | 800 | 920 | 92 | 910 | 8.8 | 10.0 | ○ | 100 |
| Comparative Example 2 | Water-based acryl | 107 | 20 | 800 | 280 | 65 | 950 | 8.2 | 4.3 | ○ | 100 |
| Comparative Example 3 | PMMA | 70 | 20 | 800 | 222 | 108 | 240 | 14.2 | 2.1 | X | 12 |
| Comparative Example 4 | PMMA | 120 | 2 | 800 | 1,120 | 820 | 920 | 815 | 1.4 | X | 100 |
| Comparative Example 5 | PMMA | 120 | 8 | 800 | 1,150 | 830 | 900 | 831 | 1.4 | X | 100 |
| Comparative Example 6 | PMMA | 120 | 20 | 50 | 1,100 | 920 | 910 | 908 | 1.2 | X | 100 |
| Comparative Example 7 | PMMA | 120 | 20 | 100 | 1,120 | 910 | 890 | 905 | 1.2 | X | 100 |
| Comparative Example 8 | PMMA | 120 | 20 | 190 | 1,110 | 850 | 262 | 870 | 1.3 | X | 15 |

As shown in Table 1 above, it can be confirmed that the transfer release films according to Examples 1 to 10 of the present invention exhibit excellent transferability and peeling force, and exhibit excellent transferability and light-peeling properties with appropriate ranges of values even when lithium is deposited thereon under high-temperature conditions or high-temperature vacuum conditions.

More specifically, when comparing the transfer release films according to Examples 2 and 3 of the present invention with those according to Comparative Examples 1 to 3, it can be confirmed that the transferability and peeling force properties of the release layer vary in a correlated manner depending on the type of resin used in the release composition and its glass transition temperature (Tg).

In addition, when comparing the transfer release films according to Examples 4 to 6 of the present invention and those according to Comparative Examples 4 and 5, it can be confirmed that the arithmetic average roughness (Ra) of the substrate has a significant correlation with the transferability and peeling force of the release layer, and that the transferability and peeling force of the release layer change depending on the arithmetic average roughness of the substrate.

Furthermore, when comparing the transfer release films according to Examples 7 to 10 of the present invention and those according to Comparative Examples 6 to 8, it can be confirmed that the coating thickness of the release layer has a significant correlation with the transferability and peeling force, and that the transferability and peeling force change depending on the coating thickness of the release layer. More specifically, it can be confirmed that as the thickness of the release layer increases, the transferability and light-peeling properties are improved, and that achieving a thickness above a certain level is necessary to ensure transferability.

As described above, the transfer release film according to the present invention may be suitably applied according to the intended use, but is not limited thereto. Moreover, the present invention can provide a high-quality transfer release film for use in the field of secondary battery materials, which exhibit excellent transferability and a peeling force within an appropriate range, thereby reducing damage to an electrode active material during transfer to a current collector, and can be used for the intended purpose without deteriorating the function of the battery.

The embodiments provided throughout the present disclosure are only some of various examples performed by the inventors of the present invention. However, the present invention should not be construed as being limited to the embodiments set forth herein. It will be apparent to those skilled in the art that various modifications and variation can be made in the present invention without departing from the spirit or scope of the invention.

**Claims**

1. A transfer release film comprising:

   a substrate;
   a release layer formed by applying a release composition including an ion conductive polymer resin and a solvent onto one surface of the substrate; and
   a lithium deposition layer formed by being deposited on an upper surface of the release layer.

2. The transfer release film of claim 1, wherein the release layer is detached from the substrate and transferred together with the lithium deposition layer to an electrode.

3. The transfer release film of claim 1, further comprising a coating layer formed on the other surface of the substrate and including an ion conductive polymer resin.

4. The transfer release film of claim 1, wherein the ion conductive polymer resin is dissolved by an electrolyte provided in an assembly of the electrode.

5. The transfer release film of claim 1, wherein the transfer release film has a peeling force satisfying the following Equations 1 and 2:

$$(\text{Equation } 1)$$

$$1 < TR < 100$$

(Equation 2)

$$1 < FR < 20$$

where TR represents the peeling force measured, prior to forming the lithium deposition layer on the release layer, by adhering Nitto-31B tape on a surface of the release layer at room temperature (23 °C) and then peeling the release layer from the substrate at a speed of 0.3 mpm while holding the Nitto-31B tape in a state where the substrate is fixed, FR represents the peeling force measured, prior to forming the lithium deposition layer on the release layer, by adhering Nitto-31B tape on a surface of the release layer at room temperature (23 °C) and then peeling the substrate from the release layer while holding the substrate in a state where the Nitto-31B tape is fixed, and a unit of peeling force is gf/inch.

6. The transfer release film of claim 1, wherein when Nitto-31B tape is adhered to a surface of the release layer and then peeled at a speed of 0.3 mpm, a peeling force satisfices the following Equation 3:

(Equation 3)

$$1 < TR1/TR0 < 5$$

where TR0 represents the peeling force of the release layer before heat treatment, TR1 represents the peeling force of the release layer after heat treatment at 80°C for 5 hours, and a unit of peeling force is gf/inch.

7. The transfer release film of claim 1, wherein when Nitto-31B tape is adhered to a surface of the lithium deposition layer and then peeled at a speed of 0.3 mpm, a peeling force of the release layer that is peeled together with the lithium deposition layer from an interface of the substrate satisfies the following Equation 4:

(Equation 4)

$$1 \leq LR \leq 200$$

where LR represents the peeling force of the release layer that is peeled together with the lithium deposition layer, and a unit of peeling force is gf/inch.

8. The transfer release film of claim 1, wherein the ion conductive polymer resin comprises at least one selected from among cyclic olefin copolymer, polymethylmethacrylate, polyacrylate, polycarbonate, polystyrene, polyurethane, polyimide, and polyethylene naphthalate.

9. The transfer release film of claim 1, wherein glass transition temperature (Tg) of the ion conductive polymer resin is 80 °C to 150 °C to improve transfer efficiency.

10. The transfer release film of claim 1, wherein the release composition comprises 3 to 50 parts by weight of the ion conductive polymer resin, based on total 100 parts by weight of the composition.

11. The transfer release film of claim 1, wherein the solvent comprises at least one selected from among ethyl acetate, methyl acetate, methyl ethyl ketone, toluene, tetrahydrofolic acid, and cyclohexane.

12. The transfer release film of claim 1, wherein a water contact angle of a surface of the release layer is 65° to 90°.

13. The transfer release film of claim 1, wherein a water vapor transmission rate of the release layer is 200 g/m$^2$·day or less.

14. The transfer release film of claim 1, wherein an ionic conductivity of the release layer is $10^{-6}$ to $10^{-1}$ S/cm.

15. The transfer release film of claim 1, wherein a surface pencil hardness of the release layer is 3H or greater.

**16.** The transfer release film of claim 1, wherein an arithmetic mean roughness (Ra) of the substrate is 10 nm to 2,000 nm.

**17.** The transfer release film of claim 1, wherein a thickness of the release layer is 0.2 $\mu$m to 2 $\mu$m.

**18.** The transfer release film of claim 1, wherein a thickness of the lithium deposition layer is 1.5 $\mu$m to 10 $\mu$m.

**19.** The transfer release film of claim 1, wherein, after the lithium deposition layer is cross-cut into 100 squares, Nitto-31B tape is attached to a surface thereof, and then the tape is removed, a residual rate of the lithium deposition layer, which indicates the number of squares remaining on the tape, is 10 or less.

**20.** A lithium electrode comprising:

a current collector;
a lithium deposition layer formed on at least one surface of the current collector; and
a protective layer formed on the lithium deposition layer,
wherein the lithium deposition layer and the protective layer are respectively formed of the lithium deposition layer and the release layer transferred from the transfer release film according to any one of claims 1 to 19.

**21.** A method of manufacturing a lithium electrode, comprising:

forming a release layer by coating, on at least one surface of a substrate, a release composition including an ion conductive polymer resin and a solvent;
forming a lithium deposition layer by depositing lithium metal on the release layer; and
attaching a surface of the lithium deposition layer onto a current collector and then transferring the release layer and the lithium deposition layer to the current collector.

FIG. 1

~110

~120

~130

FIG. 2

100

~140
~110

~120

~130

## INTERNATIONAL SEARCH REPORT

| International application No. |
| --- |
| **PCT/KR2024/008661** |

**A. CLASSIFICATION OF SUBJECT MATTER**

**C08J 7/04**(2006.01)i; **C08J 7/044**(2020.01)i; **H01M 4/134**(2010.01)i; **H01M 4/66**(2006.01)i; **H01M 4/1395**(2010.01)i; **H01B 5/14**(2006.01)i; **H01B 13/00**(2006.01)i; **B32B 37/00**(2006.01)i

According to International Patent Classification (IPC) or to both national classification and IPC

**B. FIELDS SEARCHED**

Minimum documentation searched (classification system followed by classification symbols)

C08J 7/04(2006.01); H01M 10/052(2010.01); H01M 10/42(2006.01); H01M 4/134(2010.01); H01M 4/139(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이형층(release layer), 이온전도성 고분자 수지(ion conductive polymer resin), 리튬증착층(lithium deposition layer), 이형필름(release film), 전사(transfer), 박리(exfoliation), 리튬 전극(lithium electrode)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2023-0114730 A (LG ENERGY SOLUTION, LTD.) 01 August 2023 (2023-08-01) See paragraphs [0035]-[0039], [0043], [0047]-[0051], [0059]-[0061], [0158], [0169]-[0174] and [0179]; table 1; and figure 1. | 1-3,5-21 |
| Y | | 4 |
| Y | KR 10-2023-0081966 A (LG ENERGY SOLUTION, LTD.) 08 June 2023 (2023-06-08) See paragraphs [0105]-[0108] and [0181]. | 4 |
| X | KR 10-2023-0114731 A (LG ENERGY SOLUTION, LTD.) 01 August 2023 (2023-08-01) See paragraphs [0031]-[0032], [0034], [0038], [0040], [0131], [0140], [0142], [0145]-[0147], [0158], [0168], [0179] and [0187]; table 1; and figure 1. | 1-3,5-21 |
| A | JP 2020-532077 A (LG CHEM LTD.) 05 November 2020 (2020-11-05) See entire document. | 1-21 |

[✓] Further documents are listed in the continuation of Box C.    [✓] See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **11 October 2024** | **14 October 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/008661**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2020-0000112 A (LG CHEM, LTD.) 02 January 2020 (2020-01-02)<br>See entire document. | 1-21 |

Form PCT/ISA/210 (second sheet) (July 2022)

## INTERNATIONAL SEARCH REPORT
### Information on patent family members

International application No.

**PCT/KR2024/008661**

| Patent document cited in search report | | | Publication date (day/month/year) | Patent family member(s) | | | Publication date (day/month/year) |
|---|---|---|---|---|---|---|---|
| KR | 10-2023-0114730 | A | 01 August 2023 | CN | 117916911 | A | 19 April 2024 |
| | | | | EP | 4372841 | A1 | 22 May 2024 |
| | | | | JP | 2024-528136 | A | 26 July 2024 |
| | | | | WO | 2023-146254 | A1 | 03 August 2023 |
| KR | 10-2023-0081966 | A | 08 June 2023 | CN | 117337495 | A | 02 January 2024 |
| | | | | EP | 4333101 | A1 | 06 March 2024 |
| | | | | JP | 2024-520517 | A | 24 May 2024 |
| | | | | US | 2024-0258512 | A1 | 01 August 2024 |
| | | | | WO | 2023-096307 | A1 | 01 June 2023 |
| KR | 10-2023-0114731 | A | 01 August 2023 | CN | 117897828 | A | 16 April 2024 |
| | | | | EP | 4369434 | A1 | 15 May 2024 |
| | | | | JP | 2024-530032 | A | 14 August 2024 |
| | | | | WO | 2023-146256 | A1 | 03 August 2023 |
| JP | 2020-532077 | A | 05 November 2020 | CN | 111386618 | A | 07 July 2020 |
| | | | | EP | 3667775 | A1 | 17 June 2020 |
| | | | | EP | 3667775 | A4 | 18 November 2020 |
| | | | | JP | 7048846 | B2 | 06 April 2022 |
| | | | | KR | 10-2019-0065577 | A | 12 June 2019 |
| | | | | KR | 10-2305481 | B1 | 27 September 2021 |
| | | | | US | 11532810 | B2 | 20 December 2022 |
| | | | | US | 11735717 | B2 | 22 August 2023 |
| | | | | US | 2020-0274146 | A1 | 27 August 2020 |
| | | | | US | 2023-0076640 | A1 | 09 March 2023 |
| | | | | WO | 2019-112278 | A1 | 13 June 2019 |
| KR | 10-2020-0000112 | A | 02 January 2020 | KR | 10-2543245 | B1 | 14 June 2023 |

Form PCT/ISA/210 (patent family annex) (July 2022)